Europäisches Patentamt

European Patent Office

Office européen des brevets

(19)

(11) Veröffentlichungsnummer: **0 049 364**
**B1**

# (12) EUROPÄISCHE PATENTSCHRIFT

(45) Veröffentlichungstag der Patentschrift:
**12.03.86**

(21) Anmeldenummer: **81106811.3**

(22) Anmeldetag: **01.09.81**

(51) Int. Cl.⁴: **H 05 B 6/68,** F 24 C 7/08,
G 05 D 23/19, G 05 F 1/66,
H 05 B 1/02

(54) **Anordnung zum Steuern von Heiz- und Kochgeräten.**

(30) Priorität: **05.09.80 JP 123749/80**

(43) Veröffentlichungstag der Anmeldung:
**14.04.82 Patentblatt 82/15**

(45) Bekanntmachung des Hinweises auf die Patenterteilung:
**12.03.86 Patentblatt 86/11**

(84) Benannte Vertragsstaaten:
**CH DE FR GB IT LI NL**

(56) Entgegenhaltungen:
**EP - A - 0 025 513**
**EP - A - 0 027 711**
**EP - A - 0 031 589**
**DE - A - 2 444 753**
**DE - A - 3 034 508**
**DE - A - 3 138 027**
**US - A - 4 255 639**
**US - A - 4 295 027**

**PATENT ABSTRACTS OF JAPAN, unexamined
applications, Sektion M, Vol. 4, No. 13 (M-90), 30. Jänner
1980 THE PATENT OFFICE JAPANESE GOVERNMENT
Seite 16 M 90**
**PATENT ABSTRACTS OF JAPAN, unexamined
applications, Sektion M, Vol. 3, No. 12 (M-47) 31. Jänner
1979 THE PATENT OFFICE JAPANESE GOVERNMENT
Seite 76 M 47**

(73) Patentinhaber: **BOSCH-SIEMENS HAUSGERÄTE GMBH
STUTTGART, Hochstrasse 17, D-8000 München 80 (DE)**
Patentinhaber: **Matsushita Electric Industrial Co., Ltd.,
1006, Oaza Kadoma, Kadoma-shi Osaka-fu, 571 (JP)**

(72) Erfinder: **Ueda, Shigeki, 210, Daiichi Yoshida
Manshon 206, Ohmori-cho, Nara-shi Nara-ken 630 (JP)**
Erfinder: **Onizuka, Norio, 496-30, Kihara-cho,
Kashihara-shi Nara-ken 634 (JP)**

(74) Vertreter: **Rode, Franz, BOSCH-SIEMENS
HAUSGERÄTE GMBH Patent- und Vertragswesen
Hochstrasse 17, D-8000 München 80 (DE)**

**Beschreibung**

Die Erfindung bezieht sich auf eine Anordnung zum Steuern von Heiz- und Kochgeräten, wie elektrische Öfen, Gasöfen oder Öfen mit kombinierten Heizquellen, wie sie z.B. im prioritätsälteren, nicht veröffentlichten Dokument EP-A-31 589 beschrieben ist.

Die Entwicklung auf dem Gebiet der Halbleiter-Technologien hat die Massenfertigung von billigen, grossangelegten integrierten Schaltkreisen mit vielen Funktionen möglich gemacht und eine breite Verwendung derartiger Schaltkreise als Steuereinheiten auch für im privaten Bereich verwendete Geräte (Haushaltsgeräte) möglich gemacht. Dabei sind die Bedienungsfelder von Haushaltsgeräten (Heiz- und Kochgeräten), die mit elektrischen Steuereinheiten ausgerüstet sind, im allgemeinen wie folgt aufgebaut:

Das Bedienungsfeld enthält Funktionsauswahlglieder zur Auswahl einer von mehreren Funktionen, Eingabeglieder zum Eingeben numerischer Werte zum Einstellen der Zeit oder numerischer Werte entsprechend der ausgewählten Funktion sowie Anzeigeglieder zur Wiedergabe der Zeit und/oder der numerischen Werte. Im einzelnen können die Funktionsauswahlglieder z.B. eine Mehrzahl von Einstellschaltern zur Auswahl eines von mehreren Heizwerten umfassen. Aber neben dieser Auswahl eines der Einstellschaltern besteht noch das Problem von Aufbau, Anordnung und Bedienung der Eingabeglieder zur Eingabe der numerischen Werte. Bei dem angenommenen Beispiel muss die Aufheizzeit in einem nächsten Schritt eingegeben werden. An sich wäre eine Uhr mit Drehzeiger ein geeignetes Glied, um rasch die jeweilige Zeit mit geringer Gefahr von Fehlern einzugeben. Dabei sollte nicht übersehen werden, dass Bedienungspersonen an die Verwendung von Ziffernblattuhren und ihren Vorteil, dass die Heiztemperatur durch ein «einfaches Verdrehen» eingestellt werden kann, gewöhnt sind. Jedoch wegen ihrer Analogeigenschaften, ist die Zeigeruhr ungeeignet zur unmittelbaren Wiedergabe der eingestellten Werte innerhalb des digitalen Steuersystems und kann deshalb nur mit besonderen Kunstgriffen oder zusätzlichen Einrichtungen wie A/D Konvertern in Sonderfällen eingesetzt werden.

Eingabeglieder zur Eingabe numerischer Werte, wie sie meist in Verbindung mit digitalen Steuersystemen verwendet werden, weisen meist zehn numerische Eingabeknöpfe (0–9) auf. Bei diesen Zehnknopfsystemen, wie sie typisch für Elektronenrechner sind, wird ein numerischer Wert in der Weise eingegeben, dass die Knöpfe nacheinander betätigt werden, wobei die eingegebenen Ziffern von einem niedrigen Stellenwert zu einem höheren Stellenwert bei jedem Betätigen eines Knopfes verschoben werden. Dabei ist es während der Eingabe unmöglich die Stellenzuordnung beispielsweise der zuersteingestellten Ziffer zu erkennen bis die Eingabe vollständig abgeschlossen ist. In anderen Worten, wenn beispielsweise Eingabeknöpfe 1, 5 und 3 unaufmerksam nacheinander in dieser Folge an Stelle der Folge 1, 5, 3 und 0 betätigt werden, um eine Erhitzungszeit von 15 Min. und 30 Sek. einzugeben, ist nur eine Heizzeit von 1 Min. und 53 Sek. gesetzt. Die Anordnung von 10 numerischen Eingabeknöpfen zusätzlich zu den Funktionseingabeknöpfen verbunden mit der vorstehend genannten Auswahl von Funktionen verkompliziert den Aufbau des Bedienungsfeldes wesentlich und erschwert dem Benutzer die Betätigung des gewünschten Eingabeknopfes. Darüber hinaus erhöht die grosse Zahl von Eingabegliedern die Gefahr der Mitbetätigung benachbarter Knöpfe. Während derartige Eingabefehler und fehlerhafte Operationen als Rechenfehler bei elektronischen Rechnern toleriert werden können, können sie bei Kochgeräten zu einer Überhitzung des zu garenden Gutes und möglicherweise sogar zu einem Unfall oder einem Ausbrechen von Feuer sowie Verbrennungen beim Benutzer führen.

Um die Anzahl der Eingabeknöpfe für die numerische Eingabe zu reduzieren und damit die Möglichkeit von solchen Eingabefehlern zu vermeiden, wurde vorgeschlagen, die numerischen Eingabeknöpfe den entsprechenden Ziffernstellen auf der Wiedergabeeinheit zuzuordnen. Eine solche Anordnung ist im Dokument EP-A-31 589 beschrieben. Zum Beispiel im Fall einer vierstelligen Wiedergabeeinheit sind vier numerische Eingabeknöpfe vorgesehen für die vier Stellen. Zum Beispiel würden die vier Stellen von oben nach unten der «10-Minutenstelle», der «1-Minutenstelle», der «10-Sekundenstelle» und der «1-Sekundenstelle» entsprechen und damit kann irgendein numerischer Wert an jede dieser Stellen eingegeben werden. Dabei ist die Anordnung so getroffen, dass der einzugebende numerische Wert eingegeben werden kann durch wiederholtes Niederdrücken des entsprechenden Betätigungsknopfes in der gewünschten Anzahl oder durch automatische Weiterzählung solange der Knopf zusammenhängend gedrückt ist und es ist dann nur notwendig, den Knopf nach Einstellung des gewünschten numerischen Wertes loszulassen.

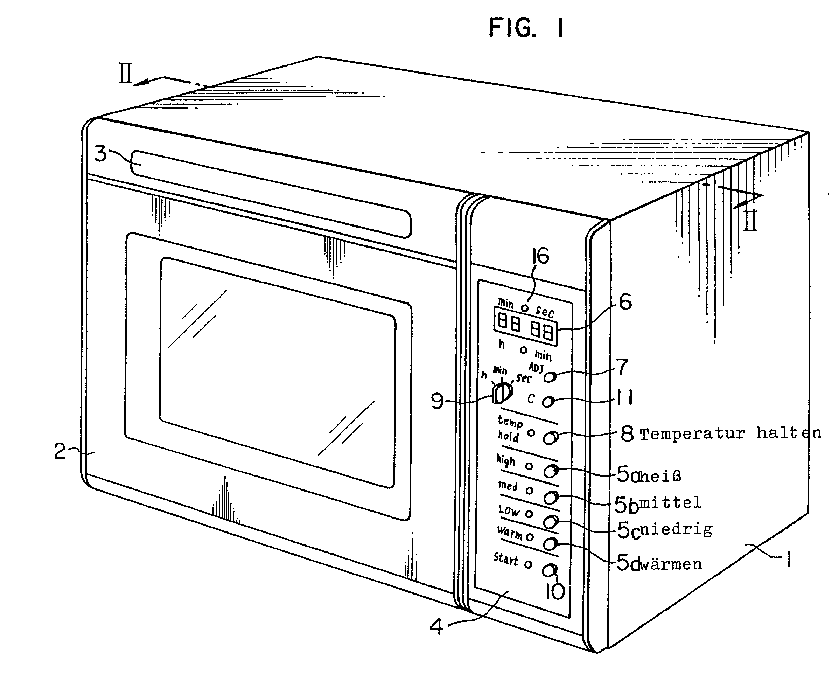

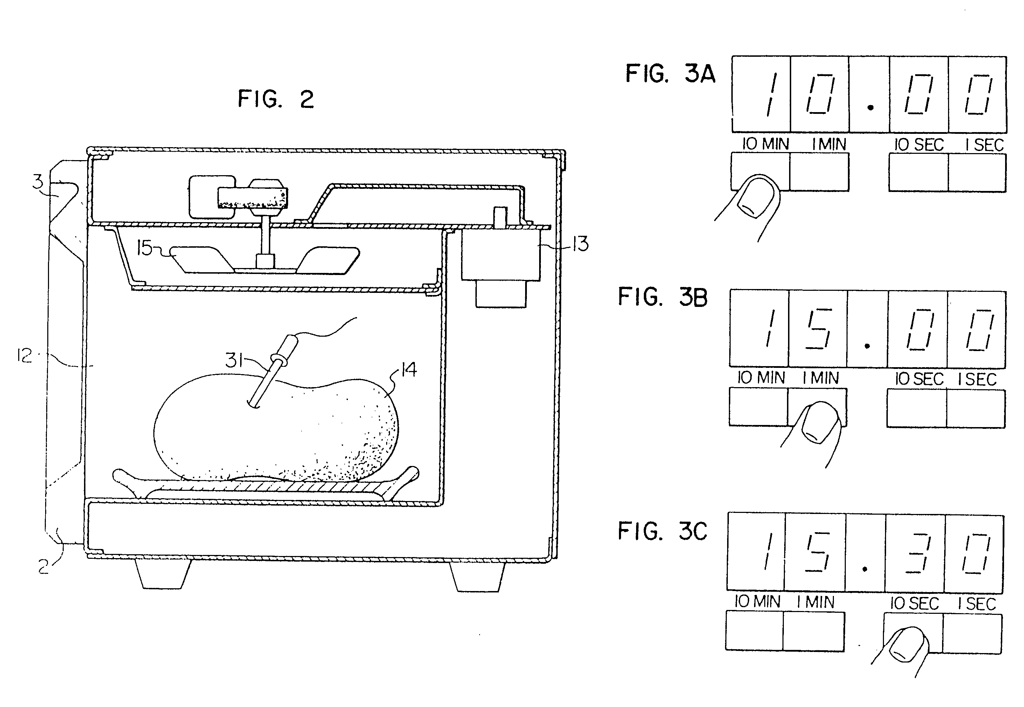

Fig. 3 zeigt die Arbeitsweise einer solchen Anordnung zur Eingabe einer Erhitzungszeit von 15 Min. und 30 Sek. Diese stellenweise numerische Eingabe ist deshalb vorteilhaft, weil die Zuordnung zwischen Anzeige und Betätigungsknöpfen sehr klar ist, wie auch aus Fig. 1 zu ersehen ist, so dass die Möglichkeit von Eingabefehlern im Vergleich mit einem Zehnknopfsystem verringert wird. Auch die Anzahl der Eingabeknöpfe ist reduziert, so dass die Gefahr des Betätigens falscher Betätigungsknöpfe reduziert wird wegen des Anordnens der Eingabeknöpfe in einer anderen Zone als die Funktionsauswahlknöpfe. Weiter ist die Hardware des Steuersystems vereinfacht u.s.w. Dieses System hat jedoch den Nachteil, dass wie vorstehend in Verbindung mit einer Ziffernblatteinstellung erwähnt, die Arbeitsweise für den Benutzer ungewöhnlich ist und dass Eingabefehler schwierig zu korrigieren sind. Angenommen die Ziffer 6 sei fehlerhafterweise an Stelle einer 5 in der Minutenstelle gesetzt worden, dann erfordert eine Korrektur das vollständige Löschen dieser Ziffer durch einen Löschknopf und dann das erneute Setzen aller Ziffern. An sich wäre es denkbar, jede der Anzeigestellen zu einem sechsstelligen oder dezimalen Ringzähler so zu verbinden, dass das Auftreten eines Übertrages nicht auf die höhere Stelle übertragen wird. In diesem Fall könnte, wenn die Zahl 6 fehlerhaft gesetzt wurde, die Minuteneingabe durch weiteres Drücken des Eingabeknopfes korrigiert werden, indem dann der Ringzähler setzt:

—— «9» → «0» → «1» —— bis die Ziffer 5 wieder gesetzt ist. Jedoch erfordert dieses Vorgehen eine beträchtliche Zeit und darüberhinaus hat der Benutzer das Gefühl der Ungewohntheit, da die Anzeige auf «10 Min.» zurückläuft, nachdem die Anzeige «19 Min.» betragen hatte. Aus Vorstehendem ergibt sich, dass die bekannten Eingabeglieder zur Eingabe numerischer Werte bei Heizgeräten noch einen beträchtlichen Raum für Entwicklungen aufweisen und dass ein Bedarf für Eingabeglieder zur Eingabe numerischer Werte besteht, die leicht zu bedienen sind, geringe Gefahr von Falschbetätigung aufweisen, zur Eingabe wenig Zeit benötigen und absolut sicher sind.

Es ist deshalb Aufgabe der vorliegenden Erfindung eine verbesserte Anordnung der Eingabeglieder zur Eingabe numerischer Werte für Heiz- und Kochgeräte, die mit einer digital arbeitenden Steuerung ausgerüstet sind, anzugeben, wobei die Eingabeglieder in einer Weise eingestellt werden, die der Arbeitsweise bekannter Zifferblattuhren entspricht und die damit beim Benutzer weniger ein Ungewöhnlichkeitsgefühl hervorrufen, wodurch ein Auftreten von Überhitzungen aufgrund irgend einer Fehloperation vermindert und die Arbeitszeit durch die Möglichkeit einer Vorwärts- und Rückwärtszählung für die numerische Eingabe reduziert wird.

Dabei soll gemäss einer Weiterbildung der vorliegenden Erfindung die Eingabe numerischer Werte im wesentlichen nur mittels eines einzigen Bedienungsknopfes möglich sein, um den Benutzer von der Verpflichtung zu befreien, den gewünschten Knopf auszuwählen, wie dies in der Vergangenheit notwendig war. Der einzige Bedienungsknopf soll getrennt von den verschiedenen anderen Funktionsauswahlknöpfen sein, wodurch die Möglichkeit der Verwechslung der Eingabeknöpfe praktisch vollständig vermieden wird.

Weiter ist angestrebt, die Eingabeglieder für numerische Werte so auszubilden, dass diese in gleichem Masse sowohl für die Eingabe der Zeit als auch der Temperatur geeignet sind.

Diese Aufgabe wird mit einer Anordnung mit den Merkmalen des Patentanspruches 1 gelöst. Die weiteren Ausgestaltungen können bei Anwendung der Merkmale der Unteransprüche realisiert werden.

Gemäss der Erfindung umfasst die Anordnung für ein Heizgerät eine digitale Steuereinheit und ein Eingabeglied für numerische Werte (Impulsgeber) einschliesslich eines Stellenumschalters und eines Rücksetzschalters, über das Heizzeit, Heiztemperatur u.s.w. eingegeben werden kann. Der Stellenumschalter ist so ausgelegt, dass jeweils eine Eingabe für Stunden, Minuten oder Sekunden möglich ist und der Rücksetzschalter ist so aufgebaut, dass er normalerweise offen gehalten und nur nach Niederdrücken des Knopfes geschlossen wird, wobei er in die Ursprungslage durch eine Feder nach Loslassen der Hand von dem Knopf zurückbewegt wird. Mit dem Bedienungsfeld sind der Impulsgeber sowie Ausgabeauswahlglieder (Einstellknöpfe) zur Auswahl der Einstellung der Heizquelle, wie beispielsweise eines Magnetrons verbunden, wobei die Heizzeit oder die Heiztemperatur entsprechend dem gewählten Einstellknopf eingestellt wird mittels des Impulsgebers, und zwar abhängig von der Länge der Zeit, während der der Einstellknopf gedrückt wird. Die Zuordnung eines numerischen Wertes wird durch Aufaddieren in der entsprechenden Stelle abhängig von der Einstellung (Stunden, Minuten oder Sekunden) des Stellenumschalters durch den Impulsgeber durchgeführt. Wenn der Rücksetzschalter eingeschaltet wird, wird der numerische Wert in der Stelle, die durch den Stellenumschalter angesteuert ist, aufeinanderfolgend vermindert. Eine numerische Anzeigeeinheit ist dabei so gestaltet, dass Stunden und Minuten dann angezeigt werden, wenn die eingestellte Zeit grösser als 60 Min. ist, und in Minuten und Sekunden, wenn die eingestellte Zeit kleiner als 60 Min. ist. Die Grösse der Heizzeit und die Lage von dem Stellenumschalter (ob Stundenanzeige oder nicht) wird bestimmt durch eine zentrale Steuereinheit und angezeigt durch Aufleuchten oder Blinken einer Stunden- und Minutenanzeige oder einer Minuten- und Sekundenanzeige und Wiedergabe der Zeit auf dem Anzeigefeld.

Weitere Merkmale sowie deren Vorteile werden im folgenden in Verbindung mit den anliegenden Zeichnungen erläutert. In diesen Zeichnungen zeigen:

Fig. 1 eine perspektivische Ansicht eines Heizgerätes mit einer Ausführungsform der vorliegenden Erfindung,

Fig. 2 eine Schnittdarstellung längs der Linie II–II in Fig. 1,

Fig. 3A, 3B und 3C Darstellungen zur Erläuterung einer Eingabeanordnung gemäss dem Stand der Technik in Verbindung mit einer numerischen Anzeige,

Fig. 4A und 4B Darstellungen eine Eingabe durch einen Impulsgeber entsprechend der Erfindung,

Fig. 5A–5D den Aufbau eines Impulsgebers,

Fig. 6 ein Blockdiagramm eines Steuersystems an einer Anordnung nach der Erfindung,

Fig. 7 ein detailliertes Schaltdiagramm zum Blockdiagramm nach Fig. 6 und

Fig. 8 ein Zeitdiagramm zur Erläuterung der Arbeitsweise des Schaltkreises nach Fig. 7.

Fig. 1 zeigt in einer perspektivischen Ansicht einen Mikrowellenherd, der die Anordnung nach der Erfindung enthält. Eine Tür 2 ist kippbar an der Vorderseite eines geeigneten Gehäuses 1 angelenkt, um den Heizraum abzuschliessen. Ein Handgriff 3 ist zum Öffnen und Schliessen der Tür 2 vorgesehen. Ein Bedienungsfeld 4 mit Funktionsauswahlgliedern bestehend aus Auswahlknöpfen 5a–5d ist vorgesehen, um eine von vier Ausgangswerten auswählen zu können, nämlich heiss, mittel, niedrig und wärmen. Weitere Schaltglieder einschliesslich eines Zeitsetzknopfes oder ADJ Knopfes 7 sind vorgesehen zur Eingabe und Wiedergabe der Zeit in einer numerischen Anzeigeeinheit 6 sowie ein Temperaturhalteeingabeknopf 8, der einen Temperaturwert über eine eingestellte Zeit während einer temperaturgesteuerten Erhitzung hält.

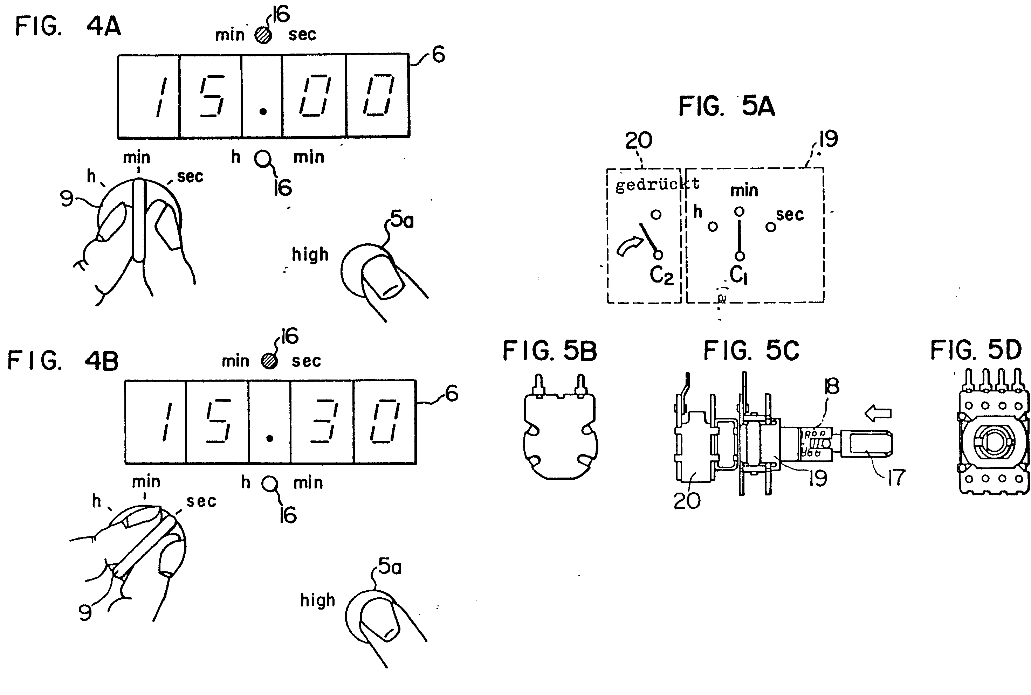

In Übereinstimmung mit der vorliegenden Erfindung ist ein Einstellglied für numerische Werte vorgesehen, welches einen Impulsgeber mit einem Drehknopf 9 als Auslöseteil umfasst. Die Fig. 4 zeigt an einem Beispiel eine Eingabe, wie sie mit Hilfe dieses Eingabeknopfes durchgeführt wird und die Arbeitsweise selbst soll später im Vergleich mit der üblichen Eingabeprozedur erläutert werden.

Weiter enthält das Bedienungsfeld 4 einen Startknopf 10 zur Auslösung des Beginns einer Erhitzung und einen Löschknopf 11 zum Löschen eines eingestellten Programms. Mit Ausnahme des ADJ-Knopfes und des Löschknopfes 11 sind die Funktionsauswahlknöpfe mit einer Kontrollanzeige versehen. Jede von diesen Kontrollanzeigen ist als LED Anzeige (nämlich als kleiner Kreis an der linken Seite von jedem Knopf) realisiert.

Zusätzlich existierte eine Anzeige 16 ebenfalls als LED Anzeige, und zwar oberhalb und unterhalb der numerischen Wiedergabeeinheit 6.

Mit diesen Anzeigen wird gekennzeichnet, ob die vierstellige Anzeigeeinheit 6 Minuten und Sekunden oder Stunden und Minuten wiedergibt und entsprechend leuchtet eine von diesen Anzeigen 16, um den Benutzer klar zu informieren, ob eine Umschaltung von einer Anzeige zu der anderen oder umgekehrt erfolgt ist. In Fig. 2 ist der Aufbau der Heizeinrichtung wiedergegeben. Die Mikrowellenenergie für den Heizraum 12 wird von einem Magnetron 13 geliefert. Ein zu erhitzendes Objekt 14 ist innerhalb des Heizraumes 12 angeordnet und wird durch Mikrowellenenergie aufgeheizt. Die Voreröffnung des Heizraumes 12 ist durch die Tür 2 geschlossen und die Mikrowellenenergie wird am Austreten gehindert. Mit 15 ist ein Umlauflüfter bezeichnet zum Verteilen der Mikrowellenenergie, um eine einheitliche elektrische Feldverteilung zu erreichen und dadurch eine ungleiche Erhitzung des Objektes 14 zu vermeiden. Obwohl die vorliegende Erfindung in Verbindung mit der Verwendung eines Mikrowellenherdes beschrieben wird, ist doch ersichtlich, dass diese in Verbindung mit elektrischen Öfen, Gasöfen und Öfen mit kombinierter Heizung anwendbar ist. Im letzteren Fall könnte die Wärmequelle 13 ein elektrisches Heizelement, ein Gasbrenner oder eine Kombination dieser beiden sein.

An Hand der Fig. 3 und 4 wird nun ein Vergleich zwischen einer Eingabe mittels Impulsgeber gemäss der Erfindung und eine Eingabe, wie sie mittels digital arbeitender Eingabeknöpfe gemäss dem Stand der Technik durchzuführen ist, der der vorliegenden Erfindung am nächsten kommt erläutert. Obwohl die dargestellte Eingabeoperation durch Knöpfe für numerische Werte bereits beschrieben wurde in Verbindung mit dem vorbekannten Stand der Technik, soll diese Arbeitsweise kurz noch einmal erläutert werden. Die Fig. 3A bis 3C zeigen die Arbeitsweise für die Eingabe einer Heizzeit von 15 Min. und 30 Sek.

Zunächst wird der 10-Minuten-Betätigungsknopf niedergedrückt, und zwar einmal (Fig. 3A). Damit sind 10 Minuten eingegeben. Dann wird der 1-Minuten-Knopf 5mal niedergedrückt, so dass 5 Min. aufaddiert werden und dies ergibt mit der vorausgegangenen Eingabe eine Eingabe von 15 Min. (Fig. 3B). Dann wird der Finger auf den 10-Sekunden Eingabeknopf bewegt und der Knopf dreimal niedergedrückt, so dass 30 Sek. eingegeben sind. Damit ist die Eingabe von 15 Min. und 30 Sek. (Fig. 3C) abgeschlossen. Die Vorteile und Nachteile dieser Arbeitsweise wurden im einzelnen vorstehend beschrieben.

Bei einer Anordnung gemäss der Erfindung wird, wie in den Fig. 4A und 4B im einzelnen gezeigt ist, der Knopf 9 durch die linke Hand gehalten und die gewünschte Ziffernstelle ausgewählt. Es sei angenommen, dass eine Minuteneingabe ausgewählt und beispielsweise der Auswahlknopf «heiss» 5a niedergedrückt ist. Solange der Knopf 5a niedergedrückt ist, registriert ein Zähler, der in dem Steuersystem vorgesehen ist, stufenweise die Heizzeit für die Heizstufe des «Heiss»-Knopfes 5a (Fig. 4A). Mit anderen Worten die Heizzeit wird in die Minutenstelle der Anzeigeeinheit 6 (in den Stellen 1 und 2) gesetzt und zwar ständig wachsend von «0- 1- 2- ---- 14- 15» in konstanten Stufen. Eine Stufe ist beispielsweise auf 0,4 Sek./pro Stufe eingestellt. Um anzuzeigen, dass die Anzeigeeinheit 6 als Minuten- und Sekundenanzeiger arbeitet, ist die Anzeige 16 eingeschaltet. Die Ansteuerung der Anzeige 16 geschieht durch die zentrale Steuereinrichtung, welche die Zuordnung des Impulsgebers abtastet und die die eingegebene Heizzeit sowie die richtige untere oder obere Anzeige 16 einschaltet, die dann leuchtet oder blinkt.

Nachdem 15 Min. gesetzt sind, dreht der Benutzer den Impulsknopf 9 nach rechts auf die «sec.» Position und die verbleibenden 30 Sek. werden eingegeben (Fig. 4B) in der selben Weise, wie in Fig. 4A gezeigt. Nach Eingabe der gewünschten 15 Min. und 30 Sek., wird der Auswahlknopf 5a losgelassen und die Eingabe der Heizzeit entsprechend der gewünschten Heiztemperatur ist abgeschlossen.

Aus vorstehendem ist zu ersehen, dass die Eingabeoperation durch den Impulsgeber dadurch vorteilhaft ist, dass zwischen Anzeigeeinheit und dem Impulsgeber eine ganz klare Zuordnung besteht im Gegensatz zu Eingabeknöpfen, so dass die Möglichkeit der Eingabe von Fehlern reduziert wird, dass die Zahl der Eingabeknöpfe reduziert ist, dass die Lage des Impulsgebers eindeutig unterschieden ist von dem Bereich der Funktionseingabeknöpfe mit dem Ergebnis, dass die Betätigung falscher Knöpfe reduziert wird, und dass die Hardware des Steuersystems vereinfacht wird.

Zusätzlich werden die folgenden Nachteile oder die Nachteile der Steuerknöpfe überwunden. Zunächst ist die Arbeitsweise ähnlich zu derjenigen von herkömmlichen Zeigeruhren mit Ziffernanzeige, da das Arbeitsglied zur numerischen Eingabe nur einen Eingabeknopf 9 benötigt, so dass der Benutzer nicht aufeinanderfolgend unterschiedliche Knöpfe drücken muss mit dem Ergebnis, dass der Benutzer keine ungewohnten Manipulationen vornehmen muss. Vielmehr gewöhnt sich der Benutzer leicht an diese Eingabeweise. Wenn irgend ein Fehler in der Eingabe erfolgt ist, kann der Wert sehr leicht korrigiert werden. Dies ist zwar noch nicht in Verbindung mit der Eingabeweise anhand der Fig. 4A und 4B erläutert, sondern wird nun in Verbindung mit den Fig. 5A bis 5D beschrieben.

Die Fig. 5A bis 5D zeigen unterteilt oder in Teilansichten den Aufbau des Drehknopfes als Steuerteil des Impulsgebers, und zwar in drei Ansichten (5B–5D). Ein Halteschaft 17 erstreckt sich durch das (nicht gezeigte) Gehäuse und ist durch eine eingebaute Feder 18 gegen die Front des Gehäuses (in einer Richtung entgegengesetzt zu der Richtung des Pfeiles) vorgespannt. Sein Schalterteil enthält ein paar gemeinsam betätigbare Schalter und einen Stellenumschalter 19 sowie einen Rücksetzschalter 20. Die Schaltstellungszuordnungen sind in Fig. 5A dargestellt. Der Rücksetzschalter ist normalerweise geöffnet und er wird geschlossen, wenn der Schaft 17 des Knopfes 9 niedergedrückt oder in der Richtung des Pfeils bewegt wird. Der Stellenumschalter 19 schliesst einen der Kontakte «h», «min» und «sec» unabhängig vom Drücken des Schaftes 17. Das Symbol $C_i$ bezeichnet einen gemeinsamen Anschluss.

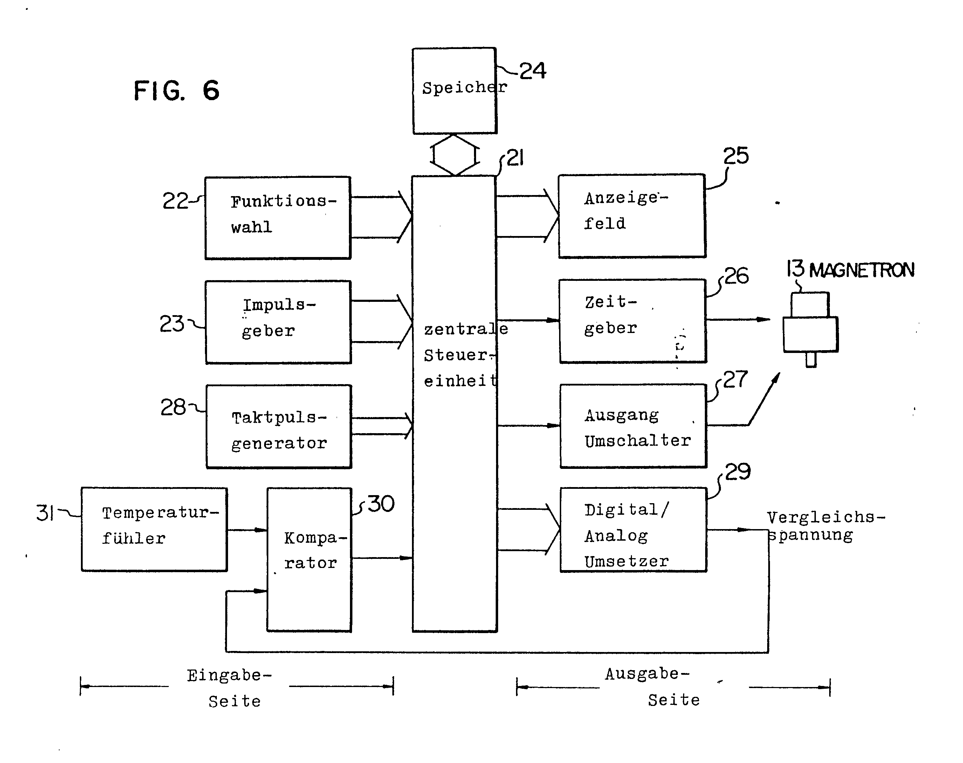

Der Aufbau eines vollständigen Steuersystems zur Realisierung der Erfindung wird im folgenden beschrieben. Fig. 6 zeigt ein Blockdiagramm dieses Steuersystems.

Eine Zentralsteuereinheit 21 steuert das gesamte Steuersystem, dekodiert die von den Auswahlknöpfen und vom Startknopf des Funktionsauswahlgliedes 22 gelieferten Eingabedaten, überträgt die Heizzeit von einem Impulsgeber 23, speichert die Ergebnisse in einem Speicher 24 und liefert die gewünschten Daten zu dem Anzeigefeld 25. In anderen Worten, die Heizzeit wird dem numerischen Anzeigefeld geliefert, die ausgewählte Funktion zu den Funktionsanzeigen und die Stellenzuordnung des numerischen Anzeigefeldes an die Einheitenanzeige. Zusätzlich löst die zentrale Steuereinheit 21 den Stromfluss zu dem Taktglied 26 abhängig von dem Startbefehl aus, steuert das Magnetron 13 zur Lieferung von Mikrowellenenergie in den Heizraum 12 und stellt die Leistung des Magnetrons 13 zum Beispiel durch Ein- und Ausschalten des Stromflusses zu dem Magnetron 13 über einen Ausgangsumschalter 27 zur Anwendung des Ausgangswertes entsprechend zu dem ausgewählten Auswahlknopf für einen zu erhitzenden Gegenstand. Die zentrale Steuereinheit 21 zählt auch die Impulse eines Taktpulsgenerators 28 zum Errechnen der verbleibenden Heizzeit in dem Speicher 24 und nach Ablauf der Heizzeit schaltet die zentrale Steuereinheit 21 das Zeitglied 26 ab zur Beendigung der Stromversorgung zu dem Magnetron 13 und damit zum Abschluss des Heizprozesses. Bei der vorliegenden Ausführungsform enthält das Heizgerät darüber hinaus ein Temperaturmessgerät mit einem Temperaturfühler 31, das in dem vorderen Ende von einer Metallröhre befestigt ist und damit die Kontrolle der Heiztemperatur durch Abtasten der inneren Temperatur des zu erhitzenden Objektes ermöglicht, so dass die zugeführte Hitze unmittelbar steuerbar ist. Auf diese Weise ist es möglich, eine von zwei Heizsteuerungen auszuwählen, d.h. eine indirekte Heizzeitsteuerung abhängig von dem Zeitgeber in Abhängigkeit zu dem zu erhitzenden Objekt und eine direkte Zeitsteuerung abhängig von dem Temperaturfühler.

Eine derartige Temperatursteuerung wird auf folgende Weise realisiert. Die zentrale Steuereinheit 21 liefert zunächst eine Vergleichsspannung in Form eines Digitalsignales zu einem D/A Converter 29. Der D/A Converter 29 wandelt das digitale Signal in eine analoge Vergleichsspannung um und liefert sie an den Komparator 30. Der Komparator 30 vergleicht die analoge Vergleichsspannung mit dem Ausgangsspannungswert des Temperaturfühlers 31, um der zentralen Steuereinheit 21 mitzuteilen, ob das zu erhitzende Objekt die eingestellte Temperatur erreicht hat. Abhängig von dem Vergleichssignal steuert die zentrale Steuereinheit 21 das Zeitglied 26 und regelt die Stromversorgung zu dem Magnetron 13.

Bei üblichen 10-Knöpfe Systemen erfolgt die Eingabe einer Heiztemperatur in die zentrale Steuereinheit 21 in der Weise, dass, wenn z.B. eine Heiztemperatur von 85 °C eingegeben werden soll, dies in der selben Weise wie die Eingabe von der Heizzeit nach einer Umschaltung des Ausgangs erfolgt durch Drücken der Nummernknöpfe 8 und 5 in dieser Folge. Dabei besteht die Praxis, jeden von den entsprechenden Knöpfen so oft zu drücken, wie die gewünschte Zahl ist oder einen getrennten «Temperatur»-Knopf zu drücken, um ein Ansteigen mit einer Rate von z.B. 5 °C zu erreichen, um die gewünschte Temperatur zu setzen. Die Einstellung gemäss der vorliegenden Erfindung ist sehr verbraucherfreundlich. Hierzu ist das Steuersystem so aufgebaut, dass der Impulsgeber auch tatsächlich zur Eingabe von Temperaturwerten verwendet wird. In anderen Worten, wenn die Eingabe des Temperaturfühlers 31 ausgewertet ist durch den Komparator 30, ändert die zentrale Steuereinheit 21 die Arbeitsweise auf temperaturabhängig. Die Anzeigeeinheit gibt eine Anzeige von «00 °C». Dann, wenn einer von den Auswahlknöpfen, z.B. der Knopf «Mittel» 5b, gedrückt wird, wird die diesem Auswahlknopf entsprechende Heiztemperatur eingegeben für eine Heizzeit solange der Knopf gedrückt wird. Dabei wird eine voreinstellbare Minimum-Temperatur angezeigt, z.B. «30 °C», und diese Temperatur wird mit einer konstanten Rate von etwa 0,4 Sek./ pro Einheit in derselben Weise, wie es hinsichtlich der Heizzeit beschrieben wurde, erhöht. Eine Einheit kann dabei eine Minimum-temperatur darstellen, die eingestellt werden kann, und dieser Wert wird erhöht in Stufen von z.B. 2°C. In diesem Fall wird der Umschalter 19 unwirksam gemacht und der eingestellte Wert wird erhöht in derselben Rate unabhängig von der Stellung des Schalters 19. Umgekehrt, wenn der Rücksetzschalter 20 gedrückt wird, beginnt die Abnahme des Wertes und der Wert wird aufeinanderfolgend erniedrigt mit derselben Rate bis der Minimum-wert von 30°C erreicht ist.

Mit dem Stellenumschalter 19 ist es möglich, getrennt die Daten in eine «10°C» Stelle und eine «1°C» Stelle einzugeben. Ein Vergleich mit den digitalen Eingabeknöpfen zeigt wiederum, dass es selbstverständlich möglich ist, eine Rücksetzfunktion für die digitalen Eingabeknöpfe zu erhalten und damit sind die verglichenen Vorteile der vorliegenden Erfindung offensichtlich. Bei der Anordnung von digitalen Eingabeknöpfen mit Rücksetzknöpfen ist es nämlich notwendig, eine von zwei Möglichkeiten anzuwenden, und zwar entweder insgesamt acht Knöpfe, also vier Vorwärts- und vier Rückwärts-knöpfe für die einzelnen Stellen, oder einen getrennten Vorwärts/Rückwärts Zählauswahlknopf vorzusehen, welcher gedrückt wird, um auszuwählen die eine oder die andere Zählrichtung des betätigten digitalen numerischen Knopfes. Während die erste Realisierung ein gutes Arbeiten ermöglicht, bringt sie eine Erhöhung der Eingabeknöpfe, welche reduziert wurde auf insgesamt acht, mit allen Problemen und dem Gefühl der Überfüllung des Bedienungsfeldes und Vermehrung der Hardware fast bis zum Umfang derjenigen von üblichen 10-Knopf-Systemen. Die zweite Ausführungsform vergrössert die Anzahl der Arbeitsschritte durch einen und ist deshalb problematisch, jedoch wird die Anzahl der Knöpfe nicht erhöht. Die Rückzählfunktion entsprechend der Erfindung ist vorteilhaft dadurch, dass sie keine speziellen Betätigungsglieder benötigt, sondern nur einen einfachen Knopf, der geeignet ist sowohl für die Stellenauswahl und die Zähloperation und für die Hardware verwendet wird in einer sehr einfachen Form.

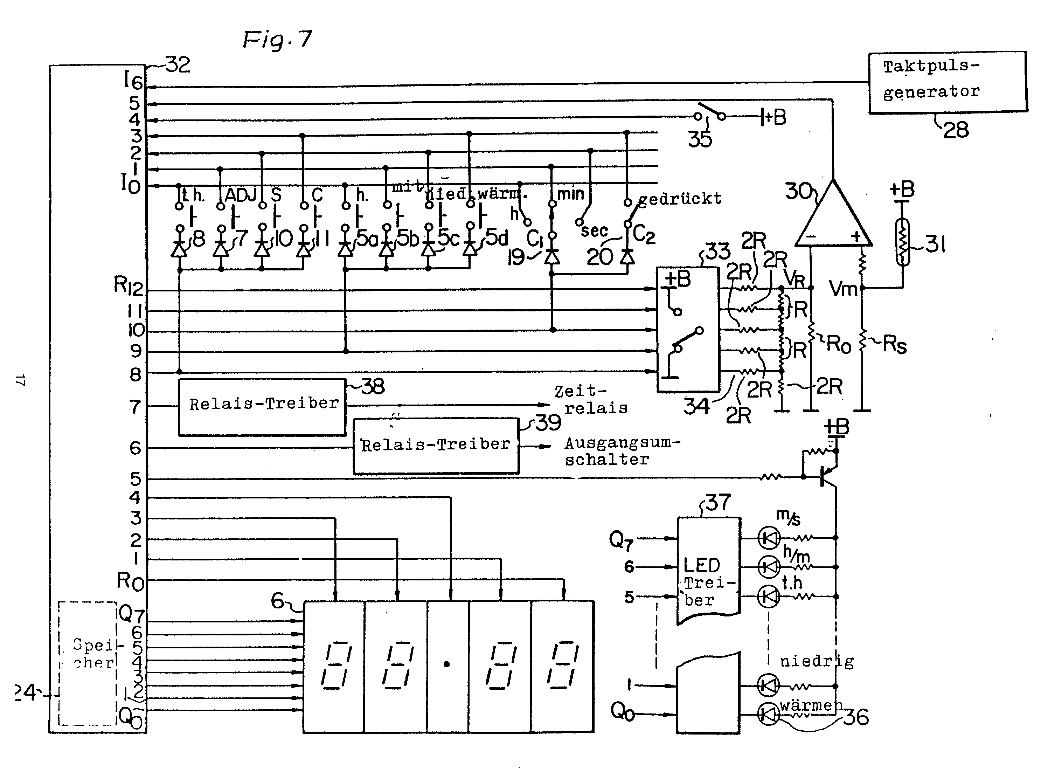

Nunmehr wird die vorliegende Erfindung beschrieben in Verbindung mit einem mehr Einzelheiten wiedergebenden Schaltkreisaufbau. Die Fig. 7 zeigt einen Schaltkreis zur Realisierung der vorgenannten Funktionen. Die zentrale Steuereinheit 21 und der Speicher 24 sind dabei auf einem Ein-Chip Microcomputer 32 untergebracht. Das Funktionsauswahlglied 22 ist gebildet durch eine Betätigungsmatrix mit 8 Druckknöpfen, nämlich dem Temperaturhalteknopf 8, dem ADJ Knopf 7, dem Startknopf 10, dem Löschknopf 11, dem Heissknopf 5a, dem Mittelknopf 5b, dem Niedrigknopf 5c und dem Wärmeknopf 5d. Der Impulsgeber ist als Teil der Eingabematrix realisiert. Die vier Kontakte des Stellenumschalters 19 und des Rücksetzschalters 20 werden abgetastet durch ein ausgangstor $R_{10}$ des Mikrocomputers 32. Die Funktionstasten werden abgetastet durch Ausgangstore $R_8$ und $R_9$.

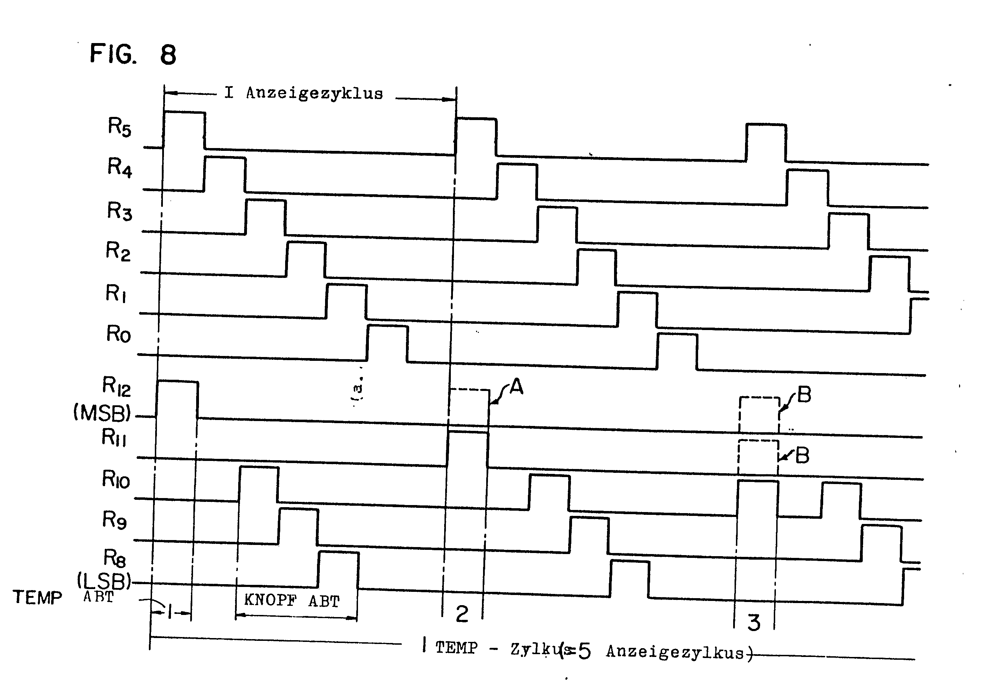

Der zeitliche Ablauf der einzelnen Schritte wird später unter Bezugnahme auf die Fig. 8 beschrieben.

Die Ausgangswerte $R_8$ bis $R_{12}$ dienen auch als digitale Referenzsignale, welche aufeinanderfolgend in eine analoge Vergleichsspannung $V_R$ durch ein Schaltelement 33, wie beispielsweise ein C-MOS Puffer- und Filter-Netzwerk 34, umgewandelt werden. Andererseits liegt der Temperatursensor 31 in Serie mit einem Vergleichswiderstand, so dass eine Änderung von seinem Widerstandswert mit der Temperatur umgewandelt wird in eine Änderung einer Spannung Vm. Letztere wird verglichen mit der Vergleichsspannung $V_R$ im Komparator 30, dessen Ausgangswert am Eingang einer Torschaltung $I_5$ des Mikrocomputers 32 liegt.

Zusätzlich zu diesen Eingängen empfängt der Mikrocomputer 32 an seinem Eingangstor $I_6$ die Taktimpulse von dem Taktpulsgenerator 28 als Zeitbasis für das Zeitgeberglied 26 und an seinem Eingangstor $I_4$ den Ausgangswert von einem Endschalter 35, welcher geöffnet und geschlossen wird abhängig von dem Öffnen und Schliessen der Ofentüre 2.

Die vierstellige Anzeigeeinheit 6 enthält fluoreszierende Anzeigeröhren und die Stellen werden abgetastet durch die Ausgänge $R_0$–$R_4$ zur dynamischen Beleuchtung. Die Symbole $Q_0$–$Q_7$ bezeichnen Datentorschaltungen zur Speisung der Datensegmente jeder Stelle. Diese Datentorschaltung steuern auch die Einschaltung der Statusanzeige 36, welche LEDs enthalten und diese werden abgetastet durch die Ausgänge $R_5$ zur dynamischen Beleuchtung. Das Bezugszeichen 37 bezeichnet einen LED Treiber. Das Zeitsteuerglied 26 mit einem Zeitrelais 26 wird gesteuert durch den Ausgang $R_7$ und der Ausgang des Ausgangsumschalters 27 mit einem Ausgangsumschalterrelais wird gesteuert durch den Ausgang $R_6$. Die Relais sind eingebaut in den zentralen Kreis und sie steuern die Stromversorgung des Magnetrons 13. Die Bezugszeichen 38 und 39 bezeichnen Relaistreiber.

Die Fig. 8 zeigt ein Zeitdiagramm der Zeiten der dynamischen Beleuchtung und der dynamischen Temperaturabtastung in dem Schaltkreis nach Fig. 7. Im Fall von Fig. 7 enthält der Schaltkreis 33 einen C/MOS Inverter und der Temperaturfühler 31 ein Element mit negativer Temperaturcharakteristik, beispielsweise einen Thermistor. Die Anzeigeeinheit 6 arbeitet im Timesharing in Übereinstimmung mit den sechs Zeitintervallen der Ausgänge $R_5$–$R_0$. Der Temperaturfühler wird mit einer Vergleichsspannung abhängig von dem Zeitbereich des Ausganges $R_5$ versorgt und der Messwert des Fühlers ist wirksam (TEMP ABT Betrieb). Die erste Abtastung liefert «10 000» und damit wird eine analoge Vergleichsspannung von $V_B/2$ an den Komparator 30 geliefert. Ist die gemessene Spannung Vm des Temperaturfühlers 31 grösser oder kleiner als $V_B/2$, wird die Vergleichsspannung der folgenden 2. Abtastung $V_B/4$ oder $(V_B/2) + (V_B/4)$. Durch Wiederholen dieses Verfahrens 5mal ist es möglich die jeweilige Temperatur von dem Temperaturfühler 31 abzutasten. In Fig. 8 zeigen die gestrichelten Linien (die Pfeile A und B) den Fall, in welchen der Wert von dem Temperaturfühler 31 höher ist als die in dem vorgesehenen TEMP ABT Verfahren erzeugte Vergleichsspannung.

Auf diese Weise wird die Wiedergabeeinheit 6 dynamisch beleuchtet in Übereinstimmung mit den sechs Zeitabschnitten und das Abtasten des Temperaturfühlers 31 wird 5mal während dieser Anzeigeabtastung wiederholt. Andererseits wird die Druckknopfmatrix gleichzeitig mit Abtastzeiten der Ausgänge $R_3$, $R_2$ und $R_1$ gesteuert und der jeweilige Knopf und der Impulsgeber werden abgetastet durch die Ausgänge $R_{10}$, $R_9$ und $R_8$ (Knopf ABT). Bei dieser Zeitunterteilung wird ein Abtasten des Temperaturfühlers 31 nicht durchgeführt durch die zentrale Steuereinheit 21 und damit können die Vergleichssignale $R_{12}$ bis $R_8$ für andere Zwecke verwendet werden, wenn gewünscht.

Während bei der vorbeschriebenen Ausführungsform ein Temperaturfühler verwendet wird, kann die vorliegende Erfindung natürlich auch angewendet werden, wenn irgend ein anderer Sensor beispielsweise ein Feuchtigkeitssensor zur Abtastung des von dem zu erhitzenden Objekt kommenden Dampfes, ein Gassensor zur Abtastung von Gasentwicklung oder ein Infrarotsensor mit einer ausgezeichneten Empfindlichkeit für Infrarotstrahlen verwendet werden und die jeweiligen Werte von dem Sensor können zur Vervollständigung des Erhitzungsprozesses der zentralen Steuereinheit zugeführt werden.

### Patentansprüche

1. Anordnung zum Steuern von Heiz- und Kochgeräten mit einem Heizraum zur Aufnahme des zu erhitzenden Gutes und Heizgliedern zur Abgabe der Heizenergie an das zu erhitzende Gut, wobei die Heizleistung sowohl hinsichtlich der Temperaturstufe als auch der angewendeten Zeit über eine zentrale Steuereinheit in einem zugeordneten Speicher voreinstellbar ist und jeder einstellbaren Heizstufe auf einem Bedienungsfeld ein Steuerknopf (Heizstufenauswahlknopf) zugeordnet ist, und wobei das Bedienungsfeld eine Anzeigeeinheit aufweist zur Wiedergabe der voreingestellten Heizzeit und/oder Heizstufe, dadurch gekennzeichnet, dass der zentralen Steuereinheit (21) ein Impulsgeber (23) mit einem Stellenauswahlschalter (9) für die Vorauswahl der Zeiteingabe zugeordnet ist, vom dem Impulse immer dann abgeleitet und dem Speicher zur Einstellung einer einer Heizstufe zugeordneten Zeit zur Addition geliefert werden, solange der zugeordnete Heizstufenauswahlknopf (5a bis 5d) gedrückt ist, und dass der durch Addition der vom Impulsgeber abgeleiteten Impulse eingestellte Wert auf der Anzeigeeinheit (6) gleichzeitig angezeigt wird.

2. Anordnung nach Anspruch 1, dadurch gekennzeichnet, dass ein Rücksetzschalter (20) vorgesehen ist, bei dessen Betätigung im Speicher der zentralen Steuereinheit die vom Impulsgeber (23) abgeleiteten Impulse von dem jeweiligen Wert subtrahiert werden.

3. Anordnung nach Anspruch 1 bis 2, dadurch gekennzeichnet, dass Stellenauswahlschalter (9) und Rücksetzschalter (20) zu einer baulichen Einheit zusammengefasst sind (Fig. 5C).

4. Anordnung nach einem der Ansprüche 1 bis 3, dadurch gekennzeichnet, dass weiter ein Temperaturfühler (31) zur Abtastung der tatsächlichen Temperatur des zu erhitzenden Gutes (14) vorgesehen ist, dessen Messwert mit einer von der zentralen Steuereinheit (21) gelieferten Vergleichsspannung (29) verglichen wird, wobei die Einstellung der Heizstufe abhängig von der Differenz zwischen Vergleichsspannung und tatsächlich gemessener Spannung erfolgt.

5. Anordnung nach einem der Ansprüche 1 bis 4, dadurch gekennzeichnet, dass die Anzeigeeinheit (6) vierstellig für eine Stunden- und Minuten- oder eine Minuten- und Sekundenanzeige ausgebildet ist, wobei abhängig von der zentralen Steuereinheit (21) die jeweilige Anzeigeart der Anzeigeeinheit (6) über Leuchtanzeigen (16) angezeigt wird.

### Claims

1. Arrangement for controlling of heating and cooking appliances with a heating chamber for inserting of the cooking good and with heating elements for delivering of the heating energy to the cooking good, whereby the heating efficiency as well in regard to the temperatur-step as to the used time is prejustable about a central control unit in a memory associated and to each heating step adjustable is associated a controlknob (heating step selection knob) on a control-panel and whereby the control-panel has a display unit for indication of the heatingtime and/or heatingstep prejustified, characterized in that to the central control-unit (21) is associated a pulse generator (23) with a position selecting switch (9) for the preselection of the time input, of which pulses are delivered and fed for addition to the memory for control of time associated with a heating step all the time, whilst the heating step selection knob (5a through 5d) associated is put down, and in that the value justified by addition of the pulses coming of the pulse-generator is indicated at the same time.

2. Arrangement according to claim 1, characterized in that a reset-switch (20) is provided, on which actuation the pulses coming of the pulse-generator (23) are subtracted of the actual values in the memory of the central control unit.

3. Arrangement according to claim 1 or 2, characterized in that position selecting switch (9) and reset-switch (20) are joined together to a construction unit (Fig. 5C).

4. Arrangement according to claim 1 through 3, characterized in that further a temperature sensor (31) is provided for scanning of the real temperature of the cooking good (14), to which value is compared with a comparing voltage (29) coming of the central control unit (21), whereby the adjusting of the heating step results dependently from the difference between comparing voltage and the voltage indeed measured.

5. Arrangement according to claim 1 through 4, characterized in that the display unit (6) is developed of four digits for a indication of hours and minutes or of minutes and seconds, whereby in accordance of the central control unit (21) is shown the kind of indications actual of the display unit (6) about luminous display.

## Revendications

1. Dispositif pour commander des appareils de chauffage et de cuisson, avec une enceinte de chauffage destinée à recevoir le produit à chauffer et avec des éléments de chauffage servant à fournir l'énergie de chauffage au produit à chauffer, la puissance de chauffage étant préréglable, du point de vue de la plage de température et de la durée à utiliser, dans une mémoire associée et par l'intermédiaire d'une unité centrale de commande et à chaque palier de chauffage réglable étant associé un bouton de commande (bouton de sélection des paliers de chauffage) sur une plage de service, alors que cette dernière comporte une unité d'affichage pour restituer la durée de chauffage et/ou les paliers de chauffage préréglés, caractérisé par le fait qu'à l'unité centrale de commande (21) est associé un générateur d'impulsions (23) à commutateurs de sélection de position (1) pour la présélection de l'introduction du temps et duquel on dérive des impulsions pour être fournies, par addition, à la mémoire en vue du réglage du temps associé à un palier de chauffage tant que le bouton de sélection associé pour les paliers de chauffage (5a à 5d) est enfoncé, et que la valeur réglée par addition des impulsions fournies par le générateur d'impulsions est en même temps indiqué sur l'unité d'affichage (6).

2. Dispositif selon la revendication 1, caractérisé par le fait qu'il est prévu un commutateur de remise à l'état initial (20) à l'actionnement duquel les impulsions dérivées du générateur d'impulsions (23) sont soustraites, dans la mémoire de l'unité centrale de commande, de la valeur concernée.

3. Dispositif selon la revendication 1 ou 2, caractérisé par le fait que le commutateur de sélection des positions (1) et le commutateur de remise à l'état initial (20) sont assemblés en une unité de construction (Fig. 5C).

4. Dispositif selon l'une des revendications 1 à 3, caractérisé par le fait qu'il est, en outre, prévu une sonde thermique (31) pour détecter la température effective du produit à chauffer (14), et dont la valeur de mesure est comparée avec une tension de comparaison (29) fournie par l'unité centrale de commande (21), le réglage du palier de chauffage ayant lieu en fonction de la différence entre la tension de comparaison et la tension effectivement mesurée.

5. Dispositif selon l'une des revendications 1 à 4, caractérisé par le fait que l'unité d'affichage (6) est réalisée à quatre chiffres pour l'affichage des heures et des minutes ou des minutes et des secondes, le genre d'affichage de l'unité d'affichage (6) s'opérant à l'aide d'affichages lumineux (16), en fonction de l'unité centrale des commandes (21).

# FIG. 1

0 049 364

FIG. 2

FIG. 3A

| 1 | 0 | . | 0 | 0 |
|---|---|---|---|---|

IO MIN   I MIN   IO SEC   I SEC

FIG. 3B

| 1 | 5 | . | 0 | 0 |
|---|---|---|---|---|

IO MIN   I MIN   IO SEC   I SEC

FIG. 3C

| 1 | 5 | . | 3 | 0 |
|---|---|---|---|---|

IO MIN   I MIN   IO SEC   I SEC

0 049 364

FIG. 4A

min ⊘ⁱ⁶ sec

FIG. 5A

FIG. 4B

min ⊘ⁱ⁶ sec

FIG. 5B   FIG. 5C   FIG. 5D

# FIG. 6

Speicher — 24

— 21

22 — Funktions-wahl

Anzeige-feld — 25

23 — Impuls-geber

zentrale Steuer-einheit

Zeit-geber — 26

13 MAGNETRON

28 — Taktpuls-generator

Ausgang Umschalter — 27

31 — Temperatur-fühler

Kompa-rator — 30

Digital/ Analog Umsetzer — 29

Vergleichs-spannung

Eingabe-Seite

Ausgabe-Seite

Fig. 7

# FIG. 8

I Anzeigezyklus

R5
R4
R3
R2
R1
R0
R12 (MSB)
R11
R10
R9
R8 (LSB)

A
B
B

TEMP ABT

KNOPF ABT

2

3

I TEMP - Zylku(=5 Anzeigezylkus)